# EUROPÄISCHE PATENTANMELDUNG

(11) **EP 0 563 012 A1**
(43) Veröffentlichungstag der Anmeldung: **29.09.1993**
(21) Anmeldenummer: 93810189.6
(22) Anmeldetag: 15.03.1993
(51) Int. Cl.: B29C 47/64, A61K 47/48, C07H 15/14, C07H 17/04, C07H 15/04

(54) **Vorrichtung zum Mischen von fliessfähigem Material**

(30) Priorität: 18.03.1992 CH 873/92; 14.08.1992 DE 4226985
(71) Anmelder: Looser, Gottlieb, FL-9496 Balzers (LI)
(72) Erfinder: Looser, Gottlieb, FL-9496 Balzers (LI)
(74) Vertreter: Ritscher, Thomas, Dr.

(57) **Zusammenfassung**

Die Vorrichtung zum Mischen von fliessfähigem, insbesondere thermoplastischem Material weist einen Stator (10) und einen sich darin drehenden Mischkörper (1) auf, der aus einem oder mehreren in Serie angeordneten Elementen besteht. Jedes Mischelement weist mindestens eine zuflusseitige Nut (2') als Zuflusstasche und eine Nut als Abflusstasche (2'') auf, die über mindestens einen Durchbruch (4) im Mischelement verbunden sind. Sei mehreren seriegeschalteten Mischelementen bildet die zuflusseitige Nut des ersten Mischelementes die Zuflusstasche und die abflusseitige Nut des letzten Mischelementes die Abflusstasche des Mischkörpers. Das Kanalsystem wird dabei durch die mit den äusseren verbundenen fluchtend ineinander übergehenden Nuten und die Durchbrüche gebildet.

## Beschreibung

Die Erfindung betrifft eine Vorrichtung zum Durchmischen von fliessfähigem Material nach dem Oberbegriff des Patentanspruchs 1.

Vorrichtungen zum Durchmischen von fliessfähigem Material werden häufig in Anlagen eingesetzt, die insbesondere in der Kunststoffverarbeitung zur Herstellung von Halbfabrikaten und Endprodukten wie z.B. Folien, Platten, Stäben, Rohren oder Schläuchen dienen. Wegen der unterschiedlichen Eigenschaften der verschiedenen Kunststoffe und der in weiten Grenzen variierenden Anforderungen an die Halbfabrikate und Endprodukte ist eine Vielzahl von solchen Anlagen zur Zubereitung und anschliessenden Formgebung der Ausgangsmaterialien bekannt.

Eine wichtige Teilaufgabe dieser Anlagen besteht darin, das Ausgangsmaterial für die Halbfabrikate und Endprodukte zu durchmischen. Das Ausgangsmaterial kann praktisch fertig rezeptiert erworben oder durch Versetzen und Vermengen von Basisstoffen mit geeigneten Zusatzstoffen, wie Stabilisatoren, Farbstoffen, Weichmachern, Härtern und Füllstoffen erzeugt werden. Das Vermengen der Basisstoffe, die meist pulver-, granulat- oder chipsförmig sind, mit den Hilfs- und/oder Zusatzstoffen erfolgt im allgemeinen chargenweise und vor dem Beginn des eigentlichen Verarbeitungsvorgangs in speziellen und dazu geeigneten Rührapparaten oder Mischtrommeln. Handelt es sich bei den miteinander zu vermengenden Basis- und Hilfs- bzw. Zusatzstoffen um plastifiziertes oder teigartiges Material, so kann auch mit geeigneten Knetern oder Mischwalzwerken gearbeitet werden. Dieser Vermengungsvorgang, bei dem das eigentliche Ausgangsmaterial erzeugt wird, findet, wie erwähnt, vor dem meist kontinuierlichen Verarbeitungsprozess und ausserhalb der dazu benützten Anlagen statt.

Besonders wichtig bei der Herstellung eines einwandfreien Halbfabrikats oder Endprodukts ist indes die in der Anlage und meist kontinuierliche Durchmischung des vorher erzeugten Ausgangsmaterials; diese Durchmischung wird im allgemeinen in den Verarbeitungsvorgang integriert durchgeführt.

Bekannte Vorrichtungen, mit welchen sich diese Durchmischung erreichen lässt, sind z.B. Extruder, vorzugsweise solche, bei denen in einem Stator bzw. Hohlzylinder ein Rotor, z.B. eine Schneckenwelle mit einer um einen Kern angeordneten Schneckenwendel umläuft und die man auch als Schneckenextruder bezeichnet.

Bei allen Extrudern wird - unabhängig von ihrer besonderen Bauart - das Ausgangsmaterial über einen Fülltrichter in den Stator bzw. Zylinder eingebracht, in dem es kontinuierlich in einer ersten Zone eingezogen, gegebenenfalls mit Heizmanschetten aufgeheizt und verdichtet, in einer zweiten Zone plastifiziert, durchmischt und komprimiert und in einer dritten Zone einem Spitzkopf zugeführt wird. Im Stator sind Lochplatten mit Siebsätzen eingesetzt, um Verunreinigungen zurückzuhalten und den Innendruck zu regulieren. Moderne Extruder enthalten Einrichtungen zum automatischen Siebwechsel.

Unabhängig davon, ob die Schneckenwelle taktmässig oder kontinuierlich angetrieben wird, erhöhen die Vorgänge beim Transport des zu verarbeitenden Materials die Durchmischung. Diese erhöhte Durchmischungswirkung ergibt sich aus der Arbeitsweise des mit einer Schnekkenwelle arbeitenden Extruders. Während die treibende Flanke der Schneckenwendel das Material zum Spritzkopf hin fördert, bildet sich wegen der verringerten Haftreibung an der warmen Innenwand des Stators eine Wirbelbewegung aus, die quer zur Schleppströmung verläuft und einen Teil des geförderten Materials als Leckströme über die Stege bzw. den Kern der Schneckenwelle führt. Die von dieser Leckströmung erzeugte erhöhte Durchmischung ist für die Reproduzierbarkeit des Vorganges und damit für die Gleichmässigkeit des Materials bzw. die Regelmässigkeit der Erzeugnisse von primärer Bedeutung.

Dennoch hat sich in der Praxis gezeigt, dass die Durchmischung des Materials im Schneckenkanal, insbesondere bei hoher Durchsatzleistung, oft ungenügend ist. Beispielsweise können infolge ungenügender Durchmischung Materialsegmente oder Füllstoffe eine bevorzugte Ausrichtung aufweisen. Verarbeitungsfehler, wie Striemen, Verfärbungen, Tränen, Knötchen (sogenannte Fischaugen), starke Toleranzschwankungen und Hohlstellen haben ihre Ursache oft in dieser ungenügenden Durchmischung des zu verarbeitenden Materials. So rotiert beispielsweise ein zähes, laminarströmendes Material während der Förderung im Schneckenkanal vermehrt um einen inneren Materialkern in der Umgebung des Kerns der Schneckenwelle, wobei in diesem Materialkern nicht ausreichend aufgeschlossene Partikel bis in die Ausstosszone gefördert werden können.

Es sind Vorrichtungen bekannt, um das im Extruder von der Schneckenwelle geförderte Material stärker zu homogenisieren bzw. zu durchmischen. Bei diesen Vorrichtungen handelt es sich um an die Schneckenwelle ansetzbare Mischköpfe mit zapfenförmigen Mischorganen. Diese zapfenförmigen Mischorgane wirken als Strömungshindernisse und erzeugen zusätzliche Wirbel, so dass verhindert wird, dass eine Laminarströmung entsteht. Die mit diesen Mischorganen erzielte distributive Durchmischung ist in der Praxis, insbesondere bei der Herstellung von dünnen Folien oder dünnwandigen Körpern, aber immer noch ungenügend.

Es sind auch Mischelemente, z.B. die sogenannten Leroy-Torpedos, bekannt, die zur Durchmischung und Homogenisierung des geförderten Materials dieses dispersiv mischen, d.h. das geförderte Material scheren. Diese Art von Mischelementen besteht aus einem zylindrischen Element, welches satt im Hohlzylinder eines Schneckenextruders angeordnet ist und in der Mantelfläche paarweise Nuten mit einseitig geschlossenen Enden aufweist, wobei zwischen je zwei einander zugeordneten Nuten eine sattelförmige Ausnehmung angeordnet ist und wobei bei der ersten der beiden Nuten das geschlossene Ende und bei der zweiten der beiden Nuten das offene Ende weiter vorn in Strömungsrichtung liegt.

Diese Art von dispersiv wirkenden Mischelementen ermöglicht zwar eine gute Homogenisierung des plastischen Materials, erfüllt aber die hohen Anforderungen nicht, die in Betrieben mit grossen Durchsatzleistungen und insbesondere für die Herstellung von dünnen Folien gestellt werden. Bei den zur erfindung führenden Untersuchungen wurde gefunden, dass bei dieser bekannten Art von dispersiver Durchmischung die beim Schneckenextruder auftretenden radialen Temperatur- und Dichtegradienten sowie auftretende unterschiedliche Homogenisierungsgrade nicht oder nicht genügend ausgeglichen werden.

Andere bekannte Vorrichtungen zum Mischen von fliessfähigem Material können in den kunststoffverarbeitenden Industrien nur bedingt verwendet werden, da das Material in hohem Masse temperaturempfindlich ist. Bei der Verwendung von herkömmlichen Mischköpfen treten immer wieder unerwünschte Inhomogenitäten und damit verbundene Fehlproduktionen auf, u.a. weil das Material bei der Scherung lokal auf einen Temperaturwert erhitzt wird, bei dem die physikalischen und chemischen Eigenschaften des Materials irreversibel verändert werden, z.B. durch Verbrennungen, Zersetzungen, Schmelzbruch u.a. All die bekannten Vorrichtungen zeitigen wegen der ungenügenden Durchmischung relativ hohe Schwankungen in ihren Ergebnissen, die zu Tränen, Striemen und Löchern in den Endprodukten oder Halbfabrikaten führen können.

Eine gewisse Verbesserung der Durchmischung kann erreicht werden, wenn die Dauer des Mischvorgangs, jedoch ohne Verminderung der Materialgeschwindigkeit, erhöht wird. Andernfalls bestünde die Gefahr, dass die Strömung laminar und damit nicht durchmischend verläuft. Eine solche Erhöhung der Dauer des Mischvorgangs bedingt aber sehr langgestreckte Mischvorrichtungen, was aus verschiedenen Gründen, wie Platzbedarf und lange Verweilzeit des Materials, nicht erwünscht ist.

Ein weiterer wesentlicher Nachteil all dieser Vorrichtungen besteht darin, dass sie dem zu durchmischenden Material einen grossen Widerstand entgegensetzen und damit nicht vermögen, dieses aktiv weiterzutransportieren. Dadurch steigert sich die Gefahr von durch interne Überhitzungen, z.B. durch Depolymerisation,verusachten Materialveränderungen.

Ausgehend von einer Vorrichtung zum Durchmischen von fliessfähigem Material, die einen Stator und ein darin befindliches Mischelement aufweist, welche einen durch paarweise angeordnete und von sattelförmigen Ausnehmungen verbundenen Nuten bestimmten Strömungskanal begrenzen, wird somit die Aufgabe der Erfindung darin gesehen, eine verbesserte Vorrichtung der eingangs genannten Art zu schaffen, mit welcher sich auch bei kurzen Transportwegen und unter Vermeidung unerwünschter Veränderungen des Materials eine einwandfreie und identisch reproduzierbare Durchmischung erzielen lässt.

Diese Aufgabe wird erfindungsgemäss durch eine Vorrichtung mit den Merkmalen des Patentanspruchs 1 gelöst. Bevorzugte Weiterbildungen der erfindungsgemässen Vorrichtung besitzen die in den Ansprüchen 2 - 10 genanten Merkmale.

Mit der erfindungsgemässen Vorrichtung erreicht man eine hervorragende Durchmischung, indem man das zu durchmischende Material durch einen Strömungskanal führt, bei welchem die Änderungen der Querschnitte und Richtungen die Entstehung von laminaren und somit praktisch oft voneinander separierten Schichten verhindern, so dass keine radialen Temperatur- und/oder Dichtegradienten im Material und somit keine inhomogenen Materialeigenschaften oder, durch Überschreitung bestimmter Werte verursachte, irreversiblen Materialveränderungen entstehen. Zum vorteilhaften Ergebnis trägt auch bei, dass die erfindungsgemässe Vorrichtung das Material kontinuierlich fördert und ihm dabei einen geringen Strömungswiderstand entgegensetzt.

Eine nochmals verbesserte Durchmischung erhält man, wenn man mehrere Mischelemente, z.B. zwei, in Serie hintereinanderschaltet. Dabei kann man beispielsweise zwei Mischelemente mit oder ohne Abstand voneinander anordnen; besonders rationell ist es aber, zwei - am besten gegengleiche - Elemente zu einem Mischkörper zusammenzufügen, wobei die zweite Nut des ersten Mischelementes und die erste Nut des zweiten Mischelementes fluchten und mit den Durchbrüchen mindestens einen Strömungskanal bzw. ein Aussparungssystem bilden, durch das die Zuflusstasche des ersten Mischelementes mit der Abflusstasche des zweiten Mischelementes verbunden ist.

Die Bezeichnung "Stator" wird hier in dem Sinne eines rotationssymmetrischen Hohlkörpers mit einem im vorzugsweise zylindrischen Hohlraum verstanden. Dementsprechend kann der Stator einer erfindungsgemässen Vorrichtung mehr oder weniger konisch ausgebildet sei, und dementsprechend kann auch das Mischelement eine im wesentlichen zylindrische oder aber mehr oder weniger konische Form aufweisen Allgemein ist der Stator bzw. Zylinder dabei mit Vorteil so dimensioniert, dass er nicht nur ein oder mehrere Mischelemente nach der Erfindung sondern auch andersartige und meist rotierende Misch- oder Förderelemente, wie z.B. einen Schneckenwendel einer Extrudervorrichtung umfassen kann, der antriebsmässig mit dem Mischelement verbunden sein kann. Der Stator kann auch in bekannter Weise mit zusätzlichen Einsätzen wie Sieben u.ä. Vorrichtungen versehen sein.

Um eine strömungsgünstige Ausbildung zu erhalten, kann es vorteilhaft sein, die Nuten so auszubilden, dass sie sich zu ihren geschlossenen Querschnitten hin verjüngen. Besonders wenn ein Mischelement nach der Erfindung in Kombination mit einer üblichen Schneckenwendel zusammenwirkt, werden die Wandungen der Zu- und Abflusstaschen im Bereich ihrer offenen Enden gemäss einer bevorzugten Ausführungsform so gestaltet, dass diese Wandungen dem Verlauf einer Schneckenwendel entsprechen bzw. diesen Verlauf fortsetzen.

Zur Reduktion des Strömungswiderstandes erweist es sich als günstig, als Verbindung von zwei benachbarten Nuten bzw. Taschen jeweils mehrere, im wesentlichen parallele Durchbrüche oder Kanäle vorzusehen. Obwohl diese Durchbrüche grundsätzlich auch an schlecht zugänglichen Stellen gebildet werden können, beispielsweise durch Elektroerosion, ist es weitaus einfacher, das Mischelement so zu gestalten, dass die Durchbrüche oder Kanäle nach Art von Bohrungen erzeugt werden können.

Die Richtungen der einzelnen Durchbrüche werden zur weiteren Verminderung des Strömungswiderstandes mit Vorteil so festgelegt, dass sie jeweils der örtlichen Steigung einer Schneckenwendel entsprechen.

Im folgenden wird die erfindungsgemässen Vorrichtung und ihrer Vorteile in den Zeichnungen anhand von bevorzugte Ausführungsbeispielen eingehender erläutert. Es zeigen:
Fig. 1 das Prinzip einer bekannten Anlage mit einem Schneckenextruder in einem Axialschnitt;
Fig. 2 ein erstes Ausführungsbeispiel des Mischelementes einer erfindungsgemässen Vorrichtung in Seitenansicht;
Fig. 3 das in Fig. 2 dargestellte Mischelement im Schnitt senkrecht zur Längsachse;
Fig. 4 ein weiteres Mischelement einer erfindungsgemässen Vorrichtung im Schnitt senkrecht zur Längsachse;
Fig. 5 das in den Fig. 2 und 3 dargestellte Mischelement im Schnitt nach A-A von Fig. 3;
Fig. 6 einen aus zwei gegengleichen Mischelementen zusammengefügten Mischkörper einer weiteren erfindungsgemässen Vorrichtung, von der Seite; und
Fig. 7 den Mischkörper im Schnitt nach 90-90 von Fig. 6.

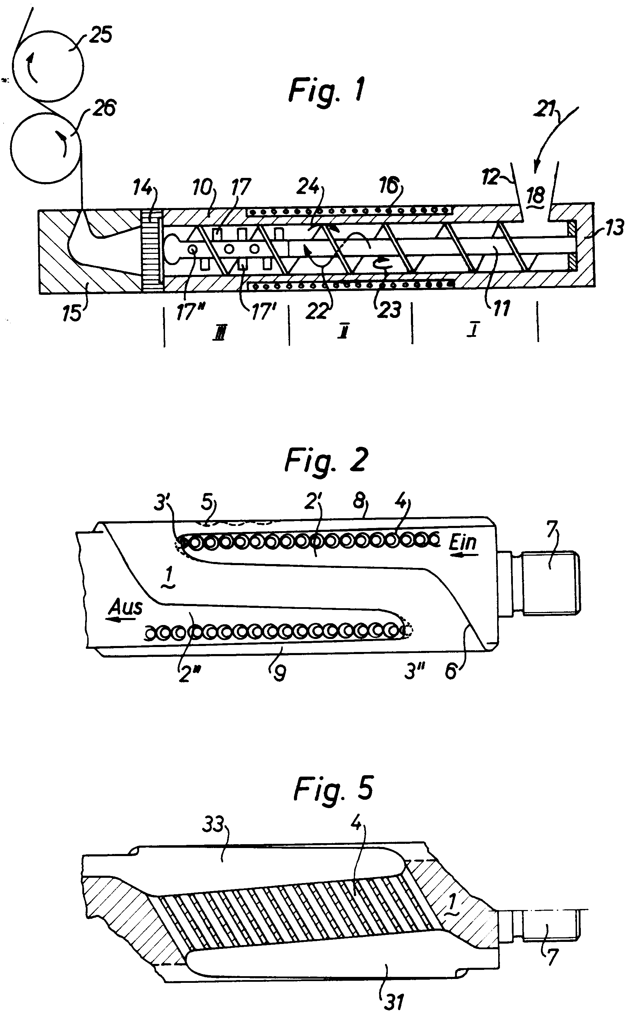

Die in Fig. 1 schematisch gezeigte Anlage besteht im wesentlichen aus einem Stator oder Zylinder 10 mit einer Stirnseite 13, in welchem eine Schneckenwelle 11 mit einer um einen Kern angeordneten Schneckenwendel drehbar gelagert ist. Das der Stirnseite 13 gegenüberliegende Ende des Stators 10 ist über ein Lochsieb 14 mit einem Spritzkopf 15 verbunden. Der Stator 10 weist nahe der Stirnseite 13 eine Einfüllöffnung 18 mit einem Einfülltrichter 12 auf. Im Betrieb der Anlage wird ein Ausgangsmaterial 21 durch den Einfülltrichter 12 in den Stator 10 eingefüllt. Dieses meist granulatförmige Material 21 wird in einer ersten Zone I eingezogen und verdichtet. Dazu kann der Kern der Schneckenwelle 11 konisch ausgeformt werden. In dieser ersten Zone I kann das Ausgangsmaterial 21 auch vorgewärmt werden, um dadurch eine bessere Verdichtung zu erlangen. In einer zweiten Zone II wird das Material über seinen Erweichungspunkt erhitzt und damit plastifiziert. Die Erhitzung des Materials geschieht einesteils durch adiabatische Erwärmung und kann anderenteils über Heizmanschetten 16 gesteigert werden. Durch den Transport des nunmehr plastifizierten Materials wird dieses ein erstes Mal durchgerührt und entsprechend durchmischt. Dabei bilden sich neben der eigentlichen Schleppströmung 22 verschiedene materialinterne Strömungen, wie beispielsweise Leckströmungen 24 und Wirbel 23 aus. Die Schneckenwelle 11 weist an ihrem Kern an dem dem Spritzkopf 15 zugewandten Enden Mischorgane auf, die der Schleppströmung 22 passiv entgegenwirken. In handelsüblichen Ausführungsformen sind diese passiven Mischorgane, auch statische Mischer genannt, als Zapfen 17, 17', 17'' oder als Lochscheiben ausgebildet und können von der Schneckenwelle getrennt werden. Das derart gemischte Material gelangt dann über das Lochsieb 14 in den Spritzkopf 15, wo es nach seiner Verarbeitung über Rollen 25, 26 abgezogen und gewickelt werden kann.

In besonderen Ausführungsformen kann die Schneckenwelle einen Durchmesser von ca. 9 cm und eine Länge von ca. 3 m aufweisen.

Das in Fig. 2 dargestellte Mischelement 1 ist so ausgebildet, dass es mit einem Verbindungskopf 7 an einer nicht dargestellten Antriebswelle, z.B. an einer Schneckenwelle, befestigt werden kann.

Das zylinderförmige Mischelement 1 weist vier Nuten 2', 2'' auf, von denen in Fig. 2 eine Nut 2' und eine Nut 2'' sichtbar sind. Um das Material in axialer Richtung fördern zu können, sind die Nuten axial angeordnet, worunter zu verstehen ist, dass sie in einer Richtung verlaufen, die eine axiale Komponente aufweist. Die Nuten weisen jeweils einen geschlossenen Endquerschnitt bei 3', 3'' auf, gegen welchen hin sie sich verjüngen und abflachen.

Zwischen jeder Nut 2' und der Innenwand des in Figue 2 nicht dargestellten Stators wird eine Zuflusstasche gebildet, deren in Fliessrichtung gesehener Anfangsbereich offen und deren Ende geschlossen ist.

Jede Zuflusstasche ist über Durchbrüche 4 mit einer benachbarten Abflusstasche verbunden, die ihrerseits zwischen der Innenwand des Stators und einer Nut 2'' gebildet ist, wobei in Strömungsrichtung gesehen ihr vorderes Ende geschlossen und ihr hinteres Ende offen ist.

Die Endbereiche der Nuten 2', 2'' bzw. der Zufluss- und Abflusstaschen sind erweitert und weisen Flanken 6 auf, welche örtlich einer Schneckenwendel entsprechende Steigung besitzen bzw. eine Schneckenwendel fortsetzen.

An der Mantelfläche des Mischelementes 1 sind sattelförmige Ausnehmungen 5, auch Aussenrillen genannt, vorgesehen.
Das von einem nicht näher dargestellten Transportmechanismus angeführte Material fliesst vorerst in die Zuflusstaschen bzw. in die Nuten 2', um dann durch die Durchbrüche 4 in die jeweils benachbarten Abflusstaschen bzw. Nuten 2'' zu gelangen. Dabei helfen die wendelartig ausgebildeten Flanken 6 und eine trichterförmige Ausbildung der Nuten 2' und 2'', das Material ohne unnötigen Widerstand in die Ausflusstaschen bzw. Nuten 2'' zu fördern.

Die sattelförmigen Ausnehmungen 5 bewirken, dass das ganze Mischelement 1 vom fliessfähigem Material umspült werden kann. Damit verschmutzt das Mischelement 1 weniger und es verringert sich die Möglichkeit eines Festlaufens des Mischelementes 1 im nicht dargestellten Stator.

In einer anderen Ausführungsform sind Leisten 9, welche die jeweiligen Zu- und Abflusstaschen bzw. Nuten 2',2'' voeinander trennen, so ausgebildet, dass sie 12 bis 15 mm Breite nicht überschreiten. Damit kann verhindert werden, dass das das Mischelement 1 umströmende Material über eine Temperatur erhitzt wird, bei welcher das zu verarbeitende Material irreversible Veränderungen erfährt.

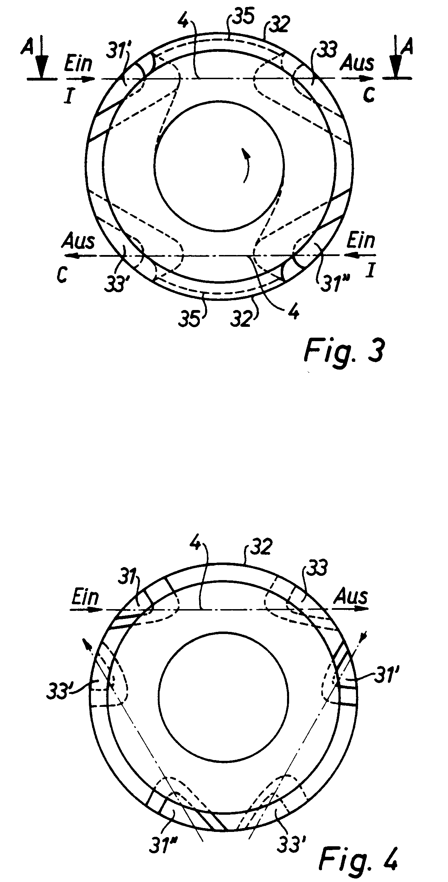

Die Form und Anordnung der Durchbrüche 4 ist für die Nivellierung der Temperatur von besonderer Bedeutung. In der Regel weist das angeführte Material einen radial verlaufenden Temperaturgradienten auf. Dabei weisen die äusseren Zonen des Materials, welche der Hohlzylinderwandung entlang geführt werden, eine höhere Temperatur auf, als die inneren Zonen. Wie aus Fig. 3 deutlich hervorgeht, sind die Durchbrüche 4 derart angeordnet, dass gleichzeitig sowohl Material aus der äusseren Zone als auch Material aus der inneren Zone anteilhaft durch die Durchbrüche transportiert wird. Damit kann ein optimaler Temperaturausgleich gewährleistet werden. Analoge Überlegungen gelten für die Nivellierung des Dichtegradienten. Als Folge dieses Ausgleichs ist das erzeugte Produkt materialmässig homogen.

In einer bevorzugten Ausführungsform weist das zylindrische Mischelement 1 eine Länge von 270 mm auf bei einem Durchmesser von 90 mm, wobei die Länge der Nuten ca. 210 mm beträgt.

Gemäss Fig. 3 sind Leisten 32 zwischen Zuflusstaschen 31', 31'' und Abflusstaschen 33', 33'' bei dieser Ausführungsform mit einem Durchmesser von ca. 9 mm verhältnismässig breit und weisen deshalb vorzugsweise sattelförmige Ausnehmungen 35 auf. Die einzelnen Nuten bzw. Taschen besitzen ein V-förmiges Profil, wobei die Nutenschenkel näherungsweise einen Winkel von 60° einschliessen. Die als Bohrungen ausgestalteten Durchbrüche 4 liegen in der tiefsten Stelle jeder Nut, welche sich gegen ihr Ende hin verjüngt. Die einzelnen Durchbrüche weisen eine Länge von ca. 43 mm auf. Die mit I bzw. 0 bezeichneten Teile zeigen die Strömungsrichtung des Materials an.

Eine weitere bevorzugte Ausführungsform, wie sie in Fig. 4 dargestellt ist, weist sechs Nuten auf. Damit kann die Breite der Leisten 32 zwischen den Zuflusstaschen 31, 31', 31'' und den Abflusstaschen 33, 33', 33'' stark reduziert werden.

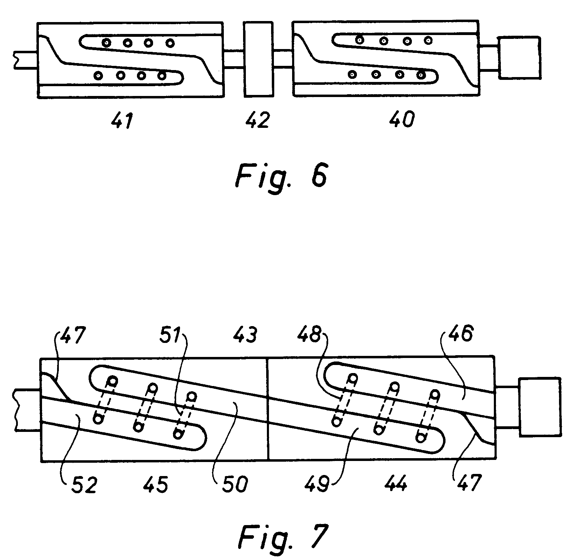

Fig. 5 zeigt, wie die Zuflusstaschen 31 über als Bohrung ausgebildete Durchbrüche 4 mit der Abflusstasche 33 verbunden ist. Die Bohrungen 4 sind parallel angeordnet und weisen alle die gleiche Länge und Steigung auf.

In dieser Ausführung haben die Bohrungen einen Durchmesser von ca. 6,5 mm und sind ca. 9 mm voneinander beabstandet. Ihre Steigung beträgt ca. 30°. Die mit den Bohrungen versehenen Flanken der Zufluss- bzw. Abflusstaschen schliessen mit einer Achsenparallele einen Winkel von ca. 4,5° derart ein, dass alle Bohrungen die gleiche Länge von ca. 43 mm besitzen. Diese Bohrungen sind in geeigneter Weise trichterartig angesenkt, um ihre Schwerwirkung zu verbessern.

Fig. 6 zeigt schematisch zwei in Serie angeordnete Mischelemente 40, 41 nach der Erfindung, zwischen welchen z.B. weitere Mischorgane oder siebartige Einsätze 42 vorhanden sein können.

In Fig. 7 ist schematisch und vereinfacht ein Mischkörper 43 dargestellt, der aus zwei gleichen, gegebenenfalls gegengleich angeordneten Mischelementen 44, 45 nach der Erfindung besteht, die durch eine axiale Verschraubung aneinander befestigt sind, wobei mit 44 das zuerst durchflossene und mit 45 das anschliessend durchflossene Mischelement des Mischkörpers 43 bezeichnet ist.

Das Mischelement 44 weist nuten 46 auf, von denen nur eine dargestellt ist, die Zuflusstaschen mit wendelartig gestalteten Flanken 47 bilden. Jede Zuflusstasche ist über Durchbrüche 48 mit einer Nut 49 verbunden, die mit einer Nut 50 des angrenzenden Mischelementes 45 fluchtend angeordnet ist. Die Nut 50 ist schliesslich über weitere Durchbrüche 51 mit einer Nut 52 verbunden. Dabei hat die Nut 49 im Mischelement 44 die Funktion einer Abflusstasche und die Nut 50 im Mischelement 45 die Funktion einer Zuflusstasche. Die nuten 46 und 52, deren freie Enden schneckenwendelartige Flanken aufweisen können, bilden die Zuflusstasche bzw. die Abflusstasche des Mischkörpers 43. Die Durchbrüche 48, die fluchtenden nuten 49 und 50, deren Enden keine schneckenwendelartigen Flanken aufweisen und die Durchbrüche 51 bilden zusammen ein Strömungskanalsystem des Mischkörpers, welches die Zuflusstasche mit der Abflusstasche verbindet.

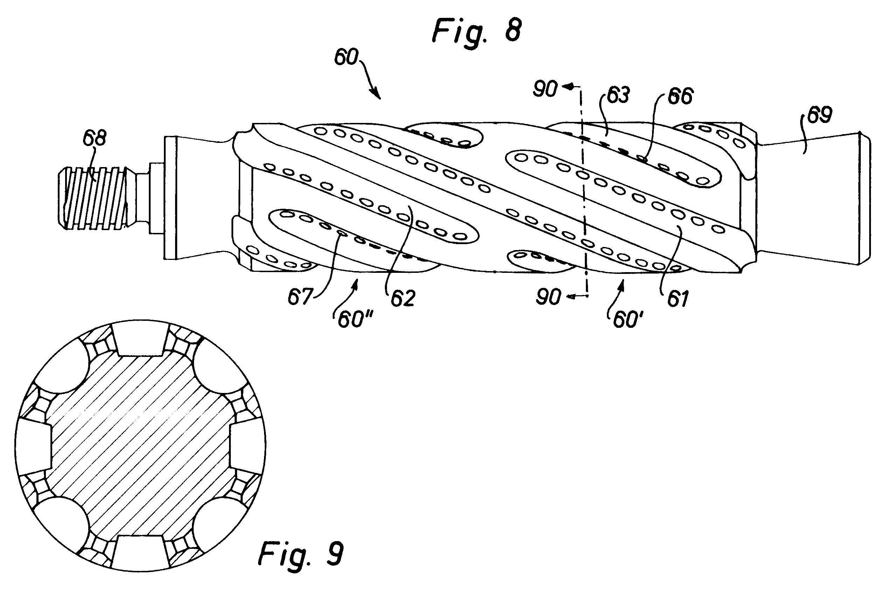

Fig. 8 zeigt einen Mischkörper 60, der aus zwei integralen Mischelementen 60' und 60'' gebildet ist. Der Mischkörper 60 weist drei Gruppen von jeweils vier parallelen nuten 61, 62, 63 auf. Die nuten 61 bilden die Zuflussnuten und die Nuten 62 die Abflussnuten des Mischkörpers 60. Die Nuten 63, deren rechte Hälfte funktionell dem Mischelement 60' und deren linke Hälfte funktionell dem Mischelement 60'' zuzurechnen ist, begrenzen zusammen mit Durchbrüchen 66 und 67, über welche sie an die Nuten 61 bzw. 62 angeschlossen sind - und natürlich zusammen mit der Innenwand eines nicht dargestellten Stators - ein Kanalsystem, das als Strömungskanal für das zu durchmischende Material dient.

Fig. 9 zeigt schliesslich einen senkrecht zur Achse verlaufenden Schnitt durch den Mischkörper der Fig. 8 längs der Linie 90-90 der Fig. 8, aus welchem Schnitt ersichtlich ist, wie die Nuten angeordnet und ausgebildet sind.

Die in Fig. 8 dargestellten, im wesentlichen axialen Nuten verlaufen nicht vollkommen achsparallel, aber die axiale Komponente ihrer Richtung ist stark überwiegend.

Es liegt im Rahmen der Erfindung, dass einzelne oder alle Merkmale der verschiedenen beschriebenen Ausführungsformen miteinander kombiniert werden können und dass die konstruktiven Einzelheiten, auf die nicht weiter eingegangen wird, den Fertigungs-, Festigkeits- und Funktionsanforderungen gehorchen. U.a. versteht es sich für den Fachmann von selbst, dass die einander zugeordneten nutenverbindenden Durchbrüche den Fertigungsanforderungen entsprechend vorgesehen werden. Insbesondere können sowohl die Lage als auch die Form und Dimensionierung den jeweiligen Erfordernissen angepasst sein. Ebenso können die Durchbrüche verschiedene Steigungen aufweisen, z.B. den Fliesswiderstand noch weiter zu verlieren. Natürlich liegen Ausführungsformen, bei welchen die Durchbrüche eine Nut mit mehreren anderen Nuten verbinden, im Bereich des fachmännischen Könnens.

Bei der Auswahl der Werkstoffe, aus denen die Mischelemente bzw. Mischkörper und die übrigen Teile der Vorrichtung hergestellt werden, sind neben den Festigkeitsanforderungen auch die thermischen Anforderungen durch die teilweise recht hohen Temperaturen zu berücksichtigen. In einer bevorzugten Ausführungsform werden die Mischelemente aus CrMoV hergestellt.

Obwohl sich die obige Beschreibung der erfindungsgemässen Vorrichtung auf das Durchmischen von Ausgangsmaterialen auf dem Gebiet der Kunststoffverarbeitung bezieht, lassen sich die Mischelemente nach der Erfindung für andere fliessfähige Materialen, wie Flüssigkeiten, Pasten, Teige oder kleinstückförmige Stoffe verwenden.

## Patentansprüche

1. Vorrichtung zum Durchmischen von kontinuierlich zugeführtem, fliessfähigem Material mit einem rotationssymmetrischen Stator (10) und einem darin angeordneten rotierenden Bauteil, das einen Mischkörper (1) mit mindestens einem Mischelement aufweist, welches mit mindestens einer ersten Nut (2') und mindestens einer zweiten Nut (2'') versehen ist, die in mindestens annähernd axialer Richtung verlaufen, wobei jede erste Nut (2') einen in Fliessrichtung gesehen geschlossenen Endquerschnitt aufweist, um mit der Innenwand des Stators (10) eine Zuflusstasche zu bilden, und jede zweite Nut (2'') einen in Fliessrichtung gesehen geschlossenen Anfangsquerschnitt aufweist, um mit der Innenwand des Stators (10) eine Abflusstasche zu bilden, und wobei jede erste Nut (2') mit einer benachbarten zweiten Nut (2'') über ein Kanalsystem verbunden ist, das mindestens einen zur genannten Richtung der Nuten (2',2'') unter einem Winkel verlaufenden Durchbruch (4) im Mischkörper (1) umfasst.

2. Vorrichtung nach Patentanspruch 2, dadurch gekennzeichnet, dass der Mischkörper (43) aus zwei Mischelementen (40, 41; 44, 45) gebildet ist, wobei die zweite Nut des ersten Mischelementes und die erste Nut des zweiten Mischelementes, vorzugsweise fluchtend, aneinander anschliessen und mit den Durchbrüchen (48,51;66,67) zusammen das Kanalsystem bilden, um die Zuflusstasche des ersten Mischelementes (40;44) mit der Abflusstasche des zweiten Mischelementes (41;45)zu verbinden.

3. Vorrichtung nach einem der vorangehenden Patentansprüche, dadurch gekennzeichnet, dass der Stator (10) und der Mischkörper (1) annähernd zylindrisch und die Durchbrechungen vorzugsweise als Bohrungen ausgebildet sind.

4. Vorrichtung nach einem der vorangehenden Patentansprüche, dadurch gekennzeichnet, dass der Stator (10) einen Schneckenkanal einer Extrudervorrichtung bildet, in welchem eine Schneckenwelle drehend angeordnet ist.

5. Vorrichtung nach einem der vorangehenden Patentansprüche, dadurch gekennzeichnet, dass der Mischkörper (1) mit einer Schneckenwelle antriebsmässig verbunden ist.

6. Vorrichtung nach einem der vorangehenden Patentansprüche, dadurch gekennzeichnet, dass sich die Nuten zu ihren geschlossenen Anfangs- bzw. Endquerschnitten hin verjüngen und/oder abflachen.

7. Vorrichtung nach einem der vorangehenden Patentansprüche, dadurch gekennzeichnet, dass die Zuflusstasche und die Abflusstasche im Bereich ihrer offenen Enden Flanken (6) aufweisen, die dem Verlauf einer Schneckenwendel entsprechen.

8. Vorrichtung nach einem der vorangehenden Patentansprüche, dadurch gekennzeichnet, dass das Kanalsystem mehrere an dieselbe Nut angeschlossene Durchbrüche (4) aufweist, die bevorzugt parallel und/oder als vorzugsweise mindestens einseitig angesenkte Bohrungen ausgebildet sind.

9. Vorrichtung nach einem der vorangehenden Patentansprüche, dadurch gekennzeichnet, dass die Richtung jedes Durchbruchs (4) eine axiale Komponente aufweist.

10. Vorrichtung nach einem der vorangehenden Patentansprüche, dadurch gekennzeichnet, dass die Richtung jedes Durchbruchs (4) mindestens annähernd der örtlichen Steigung einer Schneckenwendel entspricht.
